# EUROPEAN PATENT APPLICATION

(11) **EP 2 978 268 A1**
(43) Date of publication of application: **27.01.2016**
(21) Application number: 14770553.7
(22) Date of filing: 19.02.2014
(51) Int. Cl.: H04W 52/32, H04W 16/32, H04W 72/04

(54) **USER TERMINAL, RADIO BASE STATION, AND RADIO COMMUNICATION METHOD**

(30) Priority: 19.03.2013 JP 2013057109
(71) Applicant: NTT DOCOMO, INC., Chiyoda-ku Tokyo 100-6150 (JP)
(72) Inventor: TAKEDA, Kazuaki, Tokyo 100-6150 (JP); SAGAE, Yuta, Tokyo 100-6150 (JP); NAGATA, Satoshi, Tokyo 100-6150 (JP); KISHIYAMA, Yoshihisa, Tokyo 100-6150 (JP); ISHII, Hiroyuki, Palo Alto, California 94304 (US)
(74) Representative: Hoffmann Eitle
(86) International application number: PCT/JP2014/053932
(87) International publication number: WO 2014/148181

(57) **Abstract**

The present invention is designed to allow adequate communication even when a plurality of cells employ downlink transmission power control. A user terminal communicates with a radio base station that executes downlink transmission power control, and includes a receiving section that receives a first reference signal which is transmitted with fixed transmission power, and a second reference signal to which the downlink transmission power control is applied, a measurement section that measures the received power of the first reference signal and the second reference signal, and a transmission section that feeds back information related to the received power of the first reference signal and the second reference signal as a measurement report.

## Description

### Technical Field

The present invention relates to a radio base station that employs downlink transmission power control, a user terminal that connects with this radio base station, and a radio communication method.

### Background Art

In a UMTS (Universal Mobile Telecommunications System) network, the specifications of long-term evolution (LTE) have been drafted for the purposes of further increasing high-speed data rates, providing low delay and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single-Carrier Frequency Division Multiple Access) is used in uplink channels (uplink).

Also, successor systems of LTE (referred to as, for example, "LTE-advanced" or "LTE enhancement" (hereinafter referred to as "LTE-A")) have been under study for the purpose of achieving further broadbandization and increased speed beyond LTE. In an LTE-A system, a HetNet (Heterogeneous Network), in which a small cell (for example, a pico cell, a femto cell and so on) having a local coverage area of a radius of approximately several tens of meters is formed in a macro cell having a wide coverage area of a radius of approximately several kilometers, is under study (see, for example, non-patent literature 2).

### Citation List

### Non-Patent Literature

Non-Patent Literature 1: 3GPP TS 36.300 "Evolved UTRA and Evolved UTRAN Overall Description"
Non-Patent Literature 2: 3GPP TR 36.814 "E-UTRA Further Advancements for E-UTRA Physical Layer Aspects"

### Summary of Invention

### Technical Problem

In the above HetNet, many small cells are placed in the macro cell. Interference coordination technology is under study to reduce interference between the small cells in places where the small cells are placed at a high density.

Now, since the small cells have small coverage areas compared with that of the macro cell, the load of traffic and the number of users in each small cell change in accordance with the moving speed of user terminals, the conditions of communication and so on. In this way, the distribution of users and the load of traffic are not fixed, but change over time or between locations. When the number of users/the load of traffic is uneven in a specific cell, there is a threat that the efficiency of the use of radio resources (spectral efficiency) decreases.

So, for interference coordination between small cells, there is a demand to execute control taking into account the situation of traffic in each small cell (load balancing). As one way of such interference coordination, it may be possible to apply downlink transmission power control (DL TPC) on a per small cell basis. For example, by reducing the downlink transmission power in a cell where the traffic is heavy and increasing the downlink transmission power in a cell where the traffic is light, it may be possible to make the off-loading to the cell with light traffic. However, when downlink transmission power control is employed, problems arise regarding the method of how to select the cells to connect with, and so on.

The present invention has been made in view of the above, and it is therefore an object of the present invention to provide a user terminal, a radio base station and a radio communication method, whereby communication can be carried out adequately even when a plurality of cells employ downlink transmission power control.

### Solution to Problem

A user terminal according to the present invention is a user terminal to communicate with a radio base station that executes downlink transmission power control, and includes a receiving section that receives a first reference signal which is transmitted with fixed transmission power, and a second reference signal to which the downlink transmission power control is applied, a measurement section that measures received power of the first reference signal and the second reference signal, and a transmission section that feeds back information related to the received power of the first reference signal and the second reference signal as a measurement report.

### Advantageous Effects of Invention

According to the present invention, it is possible to carry out adequate communication between radio base stations and user terminals even when a plurality of cells employ downlink transmission power control.

### Brief Description of Drawings

FIG. 1 is a conceptual diagram of a HetNet;
FIG. 2 provides diagrams to explain the number of user terminals connected to each small cell;
FIG. 3 provides diagrams to explain interference coordination that takes load balancing into account;
FIG. 4 is a diagram to explain a method of connecting between a macro base station and small base stations, and between small base stations;
FIG. 5 provides diagrams to illustrate examples of the transmission power of reference signals transmitted from each small cell employing DL transmission power control;
FIG. 6 is a schematic diagram to illustrate an example of a radio communication system according to the present embodiment;
FIG. 7 is a diagram to explain an overall structure of a radio base station according to the present embodiment;
FIG. 8 is a diagram to explain a functional structure of a macro base station according to the present embodiment;
FIG. 9 is a diagram to explain a functional structure of a small base station according to the present embodiment;
FIG. 10 is a diagram to explain an overall structure of a user terminal according to the present embodiment; and
FIG. 11 is a diagram to explain a functional structure of a user terminal according to the present embodiment.

### Description of Embodiments

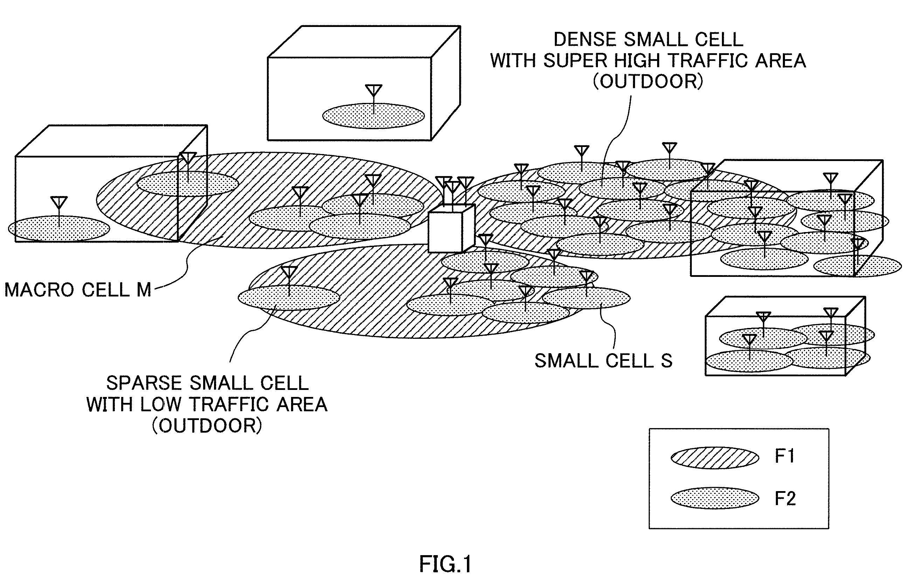

FIG. 1 is a conceptual diagram of a HetNet. As illustrated in FIG. 1, a HetNet refers to a radio communication system in which macro cells M and small cells S are arranged to geographically overlap each other at least in part. The HetNet is comprised of radio base stations MeNB to form macro cells M (hereinafter referred to as "macro base stations"), radio base stations SeNB to form small cells S (hereinafter referred to as "small base stations"), and user terminals UE to communicate with the macro base stations MeNB and the small base stations SeNB.

As illustrated in FIG. 1, in the macro cells M, a carrier F1 (hereinafter referred to as the "low frequency band carrier") of a relatively low frequency band -- for example, 800 MHz or 2 GHz -- is used. On the other hand, in many small cells S, a carrier F2 (hereinafter referred to as a "high frequency band carrier") of a relatively high frequency band -- for example, 3.5 GHz -- is used. Note that 800 MHz, 2 GHz and 3.5 GHz are only examples. 3.5 GHz may be used for the carrier for the macro cells M, and 800 MHz, 2 GHz 1.7 GHz and others may be used for the carrier for the small cells S.

Generally speaking, the distribution of users and the load of traffic are not fixed and change over time or between locations. Consequently, when many small cells S are placed in a macro cell M, the small cells are placed in such a manner that their density and environment vary (sparse and dense) between locations, as illustrated in FIG. 1.

For example, in train stations, shopping malls and so on where many user terminals gather, it may be possible to increase the density of placing small cells S (dense small cells). Meanwhile, in places where user terminals do not gather, it may be possible to communicate by lowering the density of placing small cells S (sparse small cells).

In places where small cells S are placed at a high density, there is a threat that interference is produced between neighboring small cells. Consequently, interference coordination is under study in order to reduce interference between small cells S.

In interference coordination in small cells S, it is necessary to take into account the improvement of the efficiency of the use of radio resources, simple cell planning, load balancing and so on at the same time. This is because, in small cells S having small coverage areas, there is a threat that the load of traffic and the number of users concentrate in specific small cells S, depending on the movement of user terminals and the conditions of communication, and the efficiency of the use of radio resources (spectral efficiency) decreases.

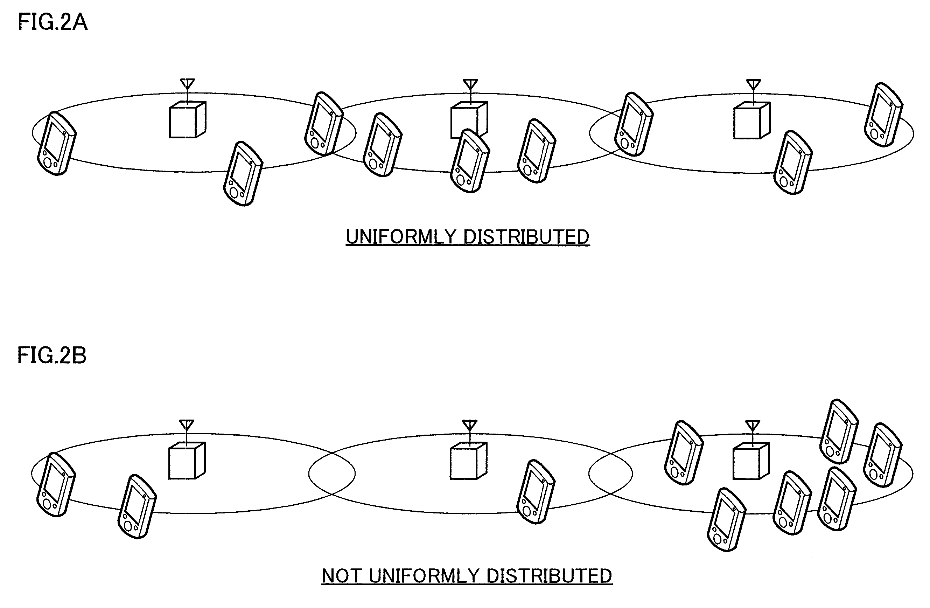

FIG. 2 illustrates examples of the number of user terminals that are connected to small cells S placed at a high density. FIG. 2A illustrates a case where the number of user terminals (or the load of traffic) is uniformly distributed in each small cell S. Note that a case is assumed here where every user terminal has equal traffic load. In this way, when the number of user terminals (or the load of traffic) is uniformly distributed in each small cell S, it is possible to make effective use of radio resources in each small cell.

However, since the small cells S have small coverage areas, the number of user terminals (or the load of traffic) becomes uneven in every small cell S, depending on the movement of each user terminal, the conditions of communication, and so on (see FIG. 2B). Consequently, as noted earlier, for interference coordination between the small cells, there is a demand to take into account the load of traffic/the number of user terminals in each small cell S (that is, apply load balancing).

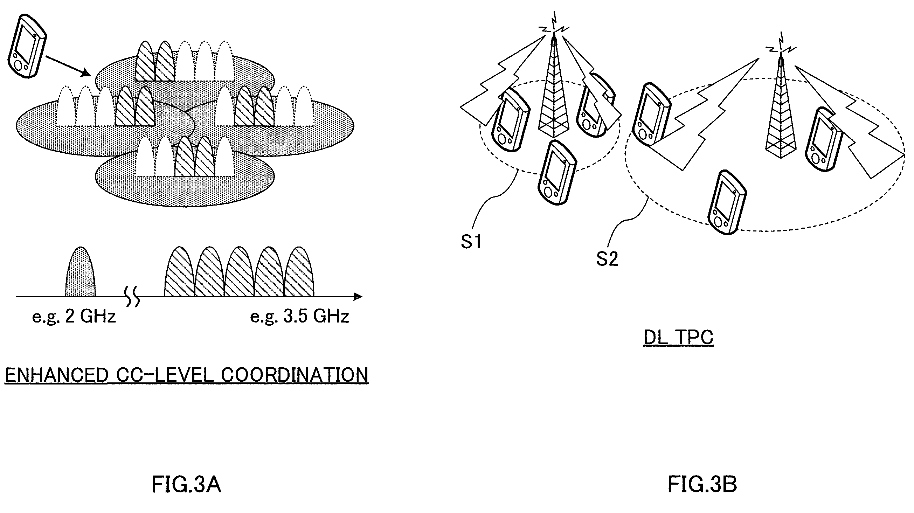

For such interference coordination, a study is in progress on enhanced CC-level coordination, whereby the frequency region to apply to each small cell S is controlled on a component-carrier (CC) level (see FIG. 3A). Every small cell can control interference on a CC level, by taking into account the load of traffic in each small cell, in addition to the CCs employed in neighboring cells.

Also, for another way of interference coordination, the present inventors have focused on a method of controlling downlink transmission power in each small cell S (DL TPC) (see FIG. 3B). In downlink transmission power control, the downlink transmission power of each small cell S is controlled taking into account the load of traffic/the number of user terminals, so that it is possible to carry out load balancing and furthermore reduce the interference between the small cells S.

For example, referring to FIG. 3B, when the downlink transmission power is the same (when the downlink coverage area is equal) between the small cell S1 and the small cell S2, four user terminals connect with the small cell S1 and two user terminals connect with the small cell 2. Meanwhile, by reducing the downlink transmission power in the small cell S1 and increasing the downlink transmission power in the small cell S2 taking into account the load of traffic/the number of user terminals, it becomes possible to connect three user terminals to each of the small cell S1 and the small cell S2.

In this way, by controlling the downlink transmission power in each small cell taking into account the load of traffic/the number of user terminals, it is possible to apply load balancing and furthermore reduce the interference between the cells. Also, the above-noted downlink transmission power control (DL TPC) can be applied to enhanced CC-level coordination as well.

In this way, for interference coordination between small cells S, it may be possible to employ downlink transmission power control. Now, specific examples of applying downlink transmission power will be described below.

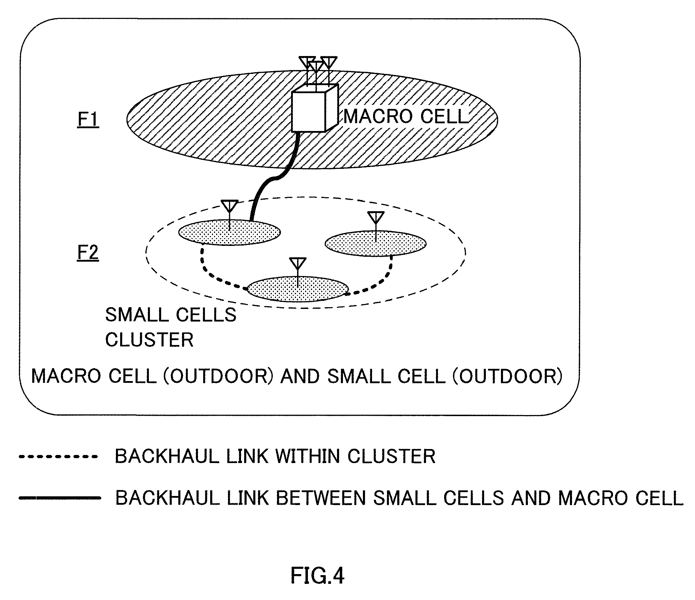

For example, a scenario is assumed here where a small cell S and a macro cell M employ separate frequencies (see FIG. 4). In this case, it may be assumed that the macro cell M and the small cell S to use separate frequencies are used simultaneously by means of CA (carrier aggregation). In this case, the macro base station MeNB and the small base station SeNB may be connected with each other via wire such as optical fiber, non-optical fiber (X2 interface) and so on, or may be connected via radio.

Note that the connection between the base stations will be referred to as the "ideal backhaul" when implemented by using optical fiber and with little delay, or may be referred to as the "non-ideal backhaul" when implemented by using the X2 interface. In comparison with the non-ideal backhaul, the ideal backhaul can control the transmission/reception of information between the base stations with little delay.

When small cells S are connected by means of the ideal backhaul, it becomes possible to execute downlink transmission power control in each small cell S dynamically, in resource block (RB) units. Meanwhile, when small cells S are connected by means of the non-ideal backhaul, it is necessary to control the downlink transmission power control in each small cell S in a relatively long cycle (semi-static transmission power control). Note that semi-static transmission power control (semi-static TPC) can be employed in the event of the ideal backhaul as well.

When semi-static transmission power control is employed for downlink power control in each small cell S, how to perform the selection (measurement) of the DL cell and the UL cell with which each user terminal connects poses a problem.

For example, a case is assumed here where the connecting cell (which may be a transmitting/receiving point, a radio base station and so on) for a user terminal is determined based on the received power (RSRP) of specific downlink reference signals transmitted from each small cell, and so on. In this case, in each small cell, when the transmission power that is applied to the downlink (for example, the data channel, the control channel and so on) is applied to the reference signals as well, the cell where the downlink transmission power is the highest is configured as the UL cell or the DL cell with which the user terminal connects.

However, in this case, the user terminal connects with the small cell, which the user terminal connects with in downlink transmission, in uplink transmission as well. That is, the user terminal has to carry out uplink transmission to a small cell with significant path loss (at a distance). As a result of this, there is a threat that the power consumption in the user terminal increases.

So, the present inventors have come up with the idea of selecting a cell, the load of traffic/the number of user terminals of which is taken into account (where load balancing, transmission power control and interference control are employed), as the cell which a user terminal connects with upon downlink transmission, and selecting a cell, the path loss of which is taken into account, as the cell which the user terminal connects with upon uplink transmission.

To be more specific, the present inventors have found out using a signal (for example, a first downlink reference signal) for configuring the UL cells which user terminals connect with, and a signal (for example, a second downlink reference signal) for configuring the DL cells, and applying different transmission power to these separate signals.

For example, the transmission power of the first downlink reference signal for configuring UL cells, transmitted from each cell, is fixed between the cells. Also, to the second downlink reference signal for configuring DL cells, transmitted from each cell, the downlink transmission power control that is employed in each separate cell is applied. Also, the user terminals feed back information related to the received power (RSRP) of the first downlink reference signal and the second downlink reference signal as measurement reports. Then, based on the measurement reports fed back from the user terminals, the UL cells and the DL cells which the user terminals connect with are selected.

In this case, as the UL cell which a user terminal connects with, it may be possible to select the cell where the path loss is the minimum (for example, the cell at the shortest distance). Also, as the DL cell which the user terminal connects with, a cell where downlink transmission power control is employed taking into account the load of traffic/the number of user terminals (for example, a cell that is different from the UL cell) may be selected.

In this way, the DL cells with which the user terminals connect are determined by using downlink reference signals to which downlink transmission power control is applied on a per cell basis, so that it is possible to adjust the load of traffic/the number of user terminals between the cells (apply load balancing), and improve the efficiency of the use of radio resources. Also, the UL cells with which the user terminals connect are determined by using downlink reference signals to which fixed transmission power is applied, so that every user terminal is able to connect with the UL cell where the path loss is the minimum. As a result of this, it is possible to reduce the consumption of transmission power in each user terminal.

Also, the present inventors have found out, using only reference signals (for example, the above second reference signal) to which downlink transmission power control is applied, finding path loss from information (for example, difference value) related to the transmission power and the received power of the reference signals, and selecting the UL cells with which user terminals connect, based on the path loss and the information related to the received power of the reference signals.

Now, the present embodiment will be described below in detail with reference to the accompanying drawings.

### (First Example)

A case will be described with a first example where, in DL transmission power control (DL TPC), a reference signal for configuring UL cells and a reference signal for configuring DL cells, to which different transmission power is applied, are used.

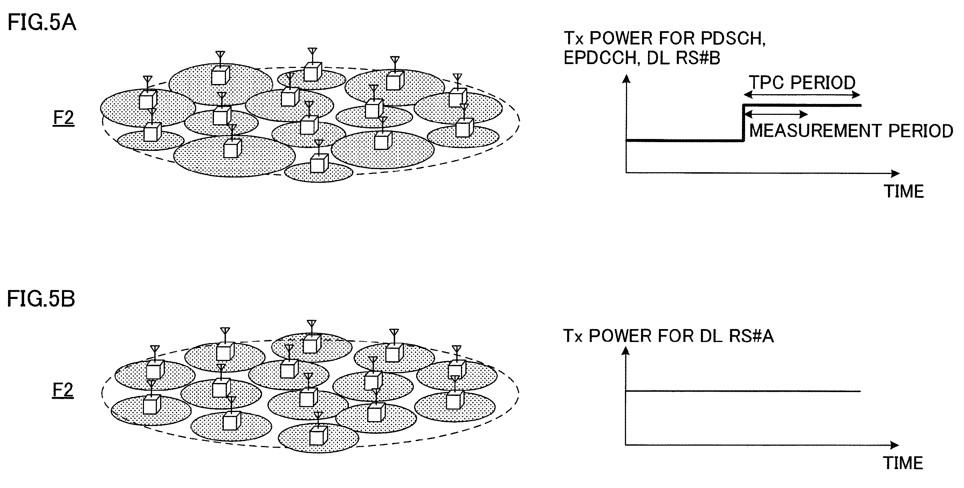

FIG. 5 illustrates examples of the transmission power of reference signals transmitted from each small cell, when downlink transmission power control (here, semi-static TPC) is employed in each small cell. To be more specific, FIG. 5A illustrates an example of a second downlink reference signal (DL RS #B), to which the DL transmission power control employed in each separate small cell is applied, and which is transmitted from each small cell. Also, FIG. 5B illustrates a first downlink reference signal (DL RS #A), which is transmitted from each small cell with fixed transmission power. To the second downlink reference signal (DL RS #B), downlink transmission power is applied in the same way as with the downlink shared channel (PDSCH), downlink control information (for example, EPDCCH) and so on.

A user terminal measures the RSRP (Reference Signal Received Power) by using the first downlink reference signal (DL RS #A) and the second downlink reference signal (DL RS #B) transmitted from the small cells. Note that the RSRQ (Reference Signal Received Quality) and other metrics may be measured as well instead of the RSRP. Note that the RSRP will be used in the following description.

Following this, the user terminal feeds back information about the received power (RSRP #A) of the first downlink reference signal and the received power (RSRP #B) of the second downlink reference signal as a measurement report. Note that the information to feed back may be RSRP #A (RSRP #B) and the difference between RSRP #A and RSRP #B.

When the user terminal is connected with a macro base station (when the user terminal makes initial connection with a macro base station), the measurement report is fed back to the macro base station. Note that, when the user terminal makes initial connection with a small base station (when a small base station operates on a stand-alone basis), it is equally possible to feed back the measurement report to the small base station. Also, it is equally possible to provide a control station that controls a plurality of small base stations and send feedback to that control station.

Note that the relationship between the macro base station and the small base stations can employ the configuration illustrated in above FIG. 4. In this case, the user terminal feeds back information about the RSRP of the reference signals transmitted from the small base stations, to the macro base station where a different frequency band is employed, as a measurement report (inter-freq. measurement).

Also, each user terminal measures the downlink reference signals that are transmitted from each small cell in a predetermined period (measurement period) and reports a measurement report. The predetermined period can be reported from the radio base stations to the user terminal. Also, the predetermined period is configured within the DL transmission power control period employed in each small cell.

The radio base station (for example, the macro base station) having received the feedback information from the user terminal selects the cells (or the radio base stations, transmitting/receiving points and so on) which the user terminal connects with, based on the information about the RSRP. According to the present embodiment, the radio base station selects the small cell to connect with on the uplink based on RSRP #A, and selects the small cell to connect with on the downlink based on RSRP #B. Note that, when the UL cell and the DL cell which the user terminal connects with are selected in the macro base station, information about these UL cell and DL cell is reported to the user terminal and the small base stations. Note that, in the event of CA, cells that are selected as described above are configured as SCells.

In this way, by determining the UL cells with which user terminals connect by using the received power of RS #A that is transmitted from each cell with fixed transmission power, every user terminal is able to carry out UL transmission using the cell where the path loss is the minimum. As a result of this, it is possible to reduce the consumption of transmission power in each user terminal. Also, by determining the DL cells with which the user terminals connect based on the received power of RS #B that is transmitted with the transmission power that is applied to each separate cell, it is possible to reduce the interference between the cells and furthermore adjust the load of traffic/the number of user terminals between the cells (load balancing). As a result of this, it is possible to improve the efficiency of the use of radio resources.

As DL RS #A and DL RS #B, it is possible to use those legacy downlink reference signals defined in Rel. 11, or define them with new reference signals. As for the legacy downlink reference signals, the cell-specific reference signal (CRS), the channel state information signal (CSI-RS: CSI Reference Signal), the user-specific reference signal for the PDSCH (UE-specific reference signal associated with the PDSCH), the demodulation reference signal for the EPDCCH (demodulation reference signal associated with the EPDCCH), the position-adjustment reference signal (PRS: Positioning Reference Signal) and so on may be used.

For example, it is possible to use the CRS as DL RS #A and use the CSI-RS as DL RS #B. Also, the CQI measurements in the user terminals can be carried out using DL RS #B. Note that when the CSI-RS is employed, a reference signal that is constituted with a plurality of CSI-RS configurations may be used as a DL RS. Also, it is equally possible to use CSI-RSs of different CSI-RS configurations as DL RS #A and DL RS #B.

When the first example is used, the radio base stations (for example, the macro base station) add information elements (IEs) for allowing the user terminals to report measurement reports by using a plurality of reference signals, to MeasConfig. The user terminals feed back information about the RSRP of a plurality of reference signals based on the information elements reported from the radio base stations through a higher layer signal (for example, by RRC signaling).

Also, the radio base stations (for example, the macro base station) can report information related to DL TPC to the user terminals by way of a higher layer signal (for example, by RRC signaling or by a broadcast signal). As for the information related to DL TPC, the cycle of downlink transmission power control, the indices of subframes where transmission power is applied, the measurement period and so on may be used.

Note that the present embodiment is applicable when small base stations are used as small transmission power nodes (base station antenna apparatuses (RRHs: Remote Radio Heads)) that are installed in distant locations from the macro base station as well. In this case, selecting an UL cell means selecting a cell for determining uplink transmission power.

### (Second Example)

A case will be described with a second example where path loss is determined from information (for example, difference values) related to the transmission power and the received power of reference signals to which each cell's transmission power control is applied, and the UL cells with which user terminals connect are selected.

The small cells each transmit a downlink reference signal, which is transmitted with the downlink transmission power applied to each small cell. Note that the downlink reference signal is equivalent to the second downlink reference signal (DL RS #B) of the above first example.

The user terminals measure the received power (RSRP) using the downlink reference signals (DL RS #B) transmitted from each small cell. Note that DL RS #B has somewhat superior orthogonality, so that it is preferable to make DL RS #B a reference signal (for example, the CSI-RS), the received power of which can be determined with high accuracy.

Also, the radio base stations (for example, the macro base station) reports, to the user terminals, information related to the transmission power of DL RS #B by using a higher layer signal (for example, by RRC signaling or by a broadcast signal) and downlink control information (DCI). The information related to transmission power has only to be information with which transmission power can be identified, and it is possible to use transmission power values, offset values from the reference transmission power value, and so on.

The user terminals find the path loss based on the measured received power and the transmission power reported from the radio base stations. The path loss can be determined from the difference between the transmission power and the received power (path loss = transmission power - received power). Then, the user terminals feed back information about the path loss and RSRP #B as measurement reports to the radio base stations. When a user terminal make initial connection with a macro base station, the measurement report is fed back to the macro base station. Note that, when a user terminal makes initial connection with a small base station (when a small base station operates on a stand-alone basis), it is equally possible to feed back the measurement report to the macro base station.

The radio base stations configure the small cells to connect with on the uplink based on the path loss reported from the user terminals, and selects the small cells to connect with on the downlink based on RSRP #B.

In this way, by determining the UL cells with which user terminals connect based on path loss, every user terminal can carry out UL transmission by using the cell where the path loss is the minimum. Also, by determining the DL cells with which the user terminals connect based on the received power of reference signals to which each cell's transmission power is applied, it is possible to adjust the load of traffic/the number of user terminals between the cells (load balancing), and improve the efficiency of the use of radio resources. Also, with the second example, by using the transmission power and the received power of RSRP #B to which each cell's transmission power is applied, it is possible to determine the UL cells and DL cells with which user terminals connect by using one kind of reference signals.

### (Structure of Radio Communication System)

Now, a radio communication system according to the present embodiment will be described below in detail. In this radio communication system, the DL transmission power controls (semi-static transmission power controls) according to the above first and second examples are employed.

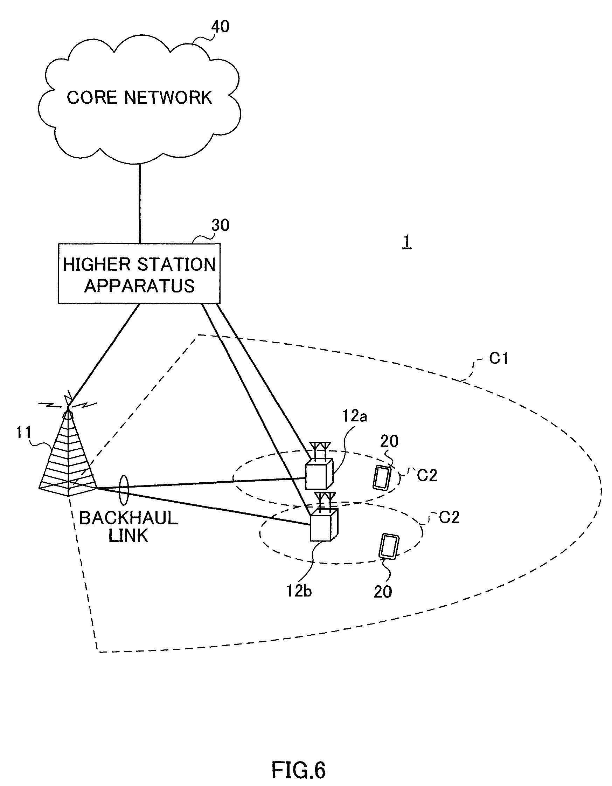

FIG. 6 is a schematic configuration diagram of a radio communication system according to the present embodiment. Note that the radio communication system illustrated in FIG. 6 is a system to accommodate, for example, the LTE system or SUPER 3G. This radio communication system can adopt carrier aggregation (CA) to group a plurality of fundamental frequency blocks (component carriers) into one, where the system bandwidth of the LTE system constitutes one unit. Also, this radio communication system may be referred to as "IMT-advanced," or may be referred to as "4G" or "FRA (Future Radio Access)."

The radio communication system 1 illustrated in FIG. 6 includes a radio base station 11 that forms a macro cell C1, and radio base stations 12a and 12b that form small cells C2, which are placed in the macro cell C1 and which are narrower than the macro cell C1. Also, in the macro cell C1 and in each small cell C2, user terminals 20 are placed. The user terminals 20 can connect with both the radio base station 11 and the radio base stations 12 (dual connectivity). In this case, the user terminals 20 are assumed to use the macro cell C1 and the small cells C2, which use different frequencies, at the same time, by means of CA (carrier aggregation).

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3.5 GHz, etc.) and a wide bandwidth may be used, or the same carrier as that used in the radio base station 11 may be used. For the carrier type between the user terminals 20 and the radio base stations 12, a new carrier type (NCT) may be used. The radio base station 11 and the radio base stations 12 (or between radio base stations 12) are connected by wire (optical fiber, X2 interface and so on) or connected by radio.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "Home eNodeBs," "RRHs (Remote Radio Heads)," "micro base stations," "transmitting/receiving points" and so on. The radio base stations 11 and 12 will be hereinafter collectively referred to as a "radio base station 10," unless distinction needs to be drawn otherwise. The user terminals 20 are terminals to support various communication schemes such as LTE, LTE-A and so on, and may include both mobile communication terminals and fixed communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing the system band into bands formed with one or continuous resource blocks, per terminal, and allowing a plurality of terminals to use mutually different bands.

Now, communication channels to be used in the radio communication system illustrated in FIG. 6 will be described. Downlink communication channels include a PDSCH (Physical Downlink Shared CHannel), which is used by each user terminal 20 on a shared basis, and downlink L1/L2 control channels (a PDCCH, a PCFICH, a PHICH and an enhanced PDCCH). User data and higher control information are transmitted by the PDSCH. Scheduling information for the PDSCH and the PUSCH and so on are transmitted by the PDCCH (Physical Downlink Control CHannel). The number of OFDM symbols to use for the PDCCH is transmitted by the PCFICH (Physical Control Format Indicator CHannel). HARQ ACKs and NACKs for the PUSCH are transmitted by the PHICH (Physical Hybrid-ARQ Indicator CHannel). Also, the scheduling information for the PDSCH and the PUSCH and so on may be transmitted by the enhanced PDCCH (EPDCCH) as well. This EPDCCH is frequency-division-multiplexed with the PDSCH (downlink shared data channel).

Uplink communication channels include the PUSCH (Physical Uplink Shared CHannel), which is used by each user terminal 20 on a shared basis as an uplink data channel, and a PUCCH (Physical Uplink Control CHannel), which is an uplink control channel. User data and higher control information are transmitted by this PUSCH. Also, downlink radio quality information (CQI: Channel Quality Indicator), ACKs/NACKs and so on are transmitted by the PUCCH.

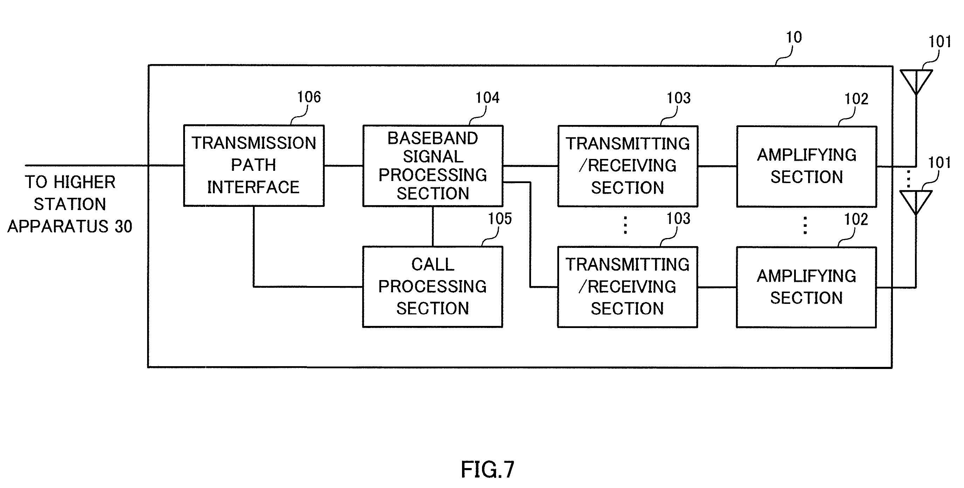

FIG. 7 is a diagram to illustrate an overall structure of a radio base station 10 (which may be either a radio base station 11 or a radio base station 12) according to the present embodiment. The radio base station 10 has a plurality of transmitting/receiving antennas 101 for MIMO transmission, amplifying sections 102, transmitting/receiving sections 103, a baseband signal processing section 104, a call processing section 105 and a transmission path interface 106.

User data to be transmitted from the radio base station 10 to a user terminal 20 on the downlink is input from the higher station apparatus 30, into the baseband signal processing section 104, via the transmission path interface 106.

In the baseband signal processing section 104, a PDCP layer process, division and coupling of the user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a pre-coding process are performed, and the result is transferred to each transmitting/receiving section 103. Furthermore, downlink control channel signals are also subjected to transmission processes such as channel coding and an inverse fast Fourier transform, and are transferred to each transmitting/receiving section 103.

Also, the baseband signal processing section 104 reports, to the user terminal 20, control information for allowing communication in the cell, through a broadcast channel. The information for allowing communication in the cell includes, for example, the uplink or downlink system bandwidth and so on. Also, the above-described information related to TPC may be reported to the user terminal by using a broadcast channel. Note that, when the user terminal is connected with both the radio base station 11 and the radio base station 12 (dual connection), it is possible to report the information from the radio base station 12, which functions as a central control station, to the user terminal by using a broadcast channel.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for data that is transmitted from the user terminal 20 to the radio base station 10 on the uplink, radio frequency signals that are received in the transmitting/receiving antennas 101 are each amplified in the amplifying sections 102, converted into baseband signals through frequency conversion in each transmitting/receiving section 103, and input into the baseband signal processing section 104.

In the baseband signal processing section 104, the user data that is included in the input baseband signals is subjected to an FFT process, an IDFT process, error correction decoding, a MAC retransmission control receiving process and RLC layer and PDCP layer receiving processes, and the result is transferred to the higher station apparatus 30 via the transmission path interface 106. The call processing section 105 performs call processing such as setting up and releasing communication channels, manages the state of the radio base station 10 and manages the radio resources.

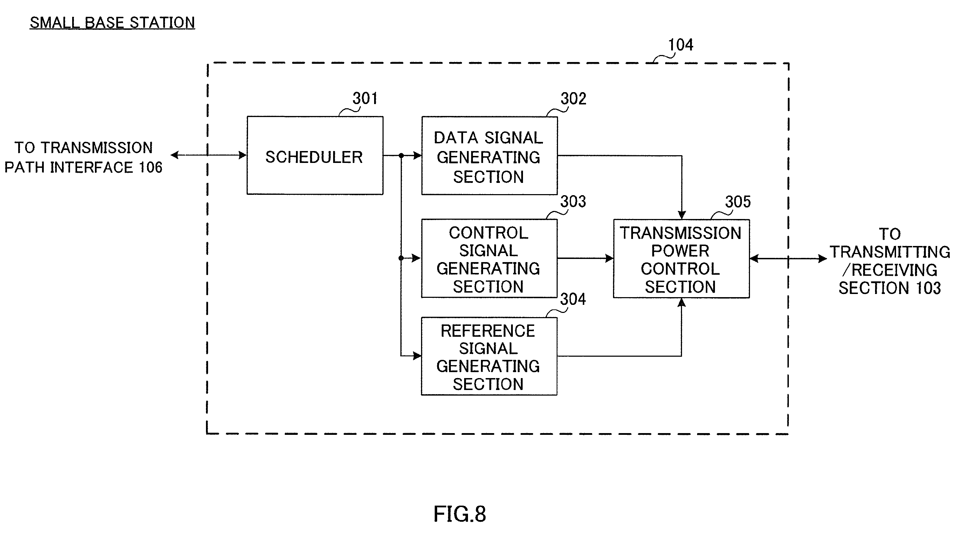

FIG. 8 is a principle functional configuration diagram of the baseband signal processing section 104 provided in a small base station (radio base station 12) according to the present embodiment. Note that, although FIG. 8 primarily illustrates downlink (transmitting) functional configurations, the radio base station 10 may have uplink (receiving) functional configurations as well.

As illustrated in FIG. 8, the baseband signal processing section 104 provided in the radio base station 12 has a scheduler 301, a data signal generating section 302, a control signal generating section 303, a reference signal generating section 304 and a transmission power control section 305.

The scheduler 301 schedules downlink user data to transmit in the PDSCH, downlink control information to transmit in the PDCCH and/or the enhanced PDCCH (EPDCCH), and the reference signals. To be more specific, the scheduler 301 allocates radio resources based on command information from the higher station apparatus 30, feedback information (for example, CSI including CQIs, RIs and so on) from each user terminal 20, and so on. Note that, when radio resources are allocated based on commands from the macro base station (radio base station 11), a configuration may be employed in which no scheduler 301 is provided.

The data signal generating section 302 generates data signals (PDSCH signal), the allocation of which to radio resources is determined in the scheduler 301. The data signals that are generated in the data signal generating section 302 are subjected to a coding process and a modulation process, based on coding rates and modulation schemes that are determined based on CSI from each user terminal 20 and so on.

The control signal generating section 303 generates control signals (PDSCH signal and/or EPDCCH signal) for the user terminals 20, the allocation of which to each subframe is determined in the scheduler 301.

The reference signal generating section 304 generates various reference signals to transmit on the downlink. For example, the reference signal generating section 304 generates cell-specific reference signals (CRSs), channel state measurement signals (CSI-RSs), user-specific reference signals for the PDSCH (DM-RSs), demodulation reference signals for the EPDCCH (DM-RSs), position-adjustment reference signals (PRSs), and so on. These reference signals or reference signals that are newly defined can be used as the above-noted first downlink reference signal (DL RS #A) for configuring UL cells and the second downlink reference signal (DL RS #B) for configuring DL cells.

The transmission power control section 305 determines the transmission power of the downlink data signals, the downlink control signals and the reference signals. The transmission power control section 305 applies DL transmission power control to the downlink data signals (PDSCH signals), the downlink control signal (EPDCCH signals) and the above second downlink reference signal (DL RS #B). On the other hand, the transmission power control section 305 apples fixed transmission power, without applying DL transmission power control, to the above first downlink reference signal (DL RS #A). The downlink data signals, downlink control signals and reference signals, to which transmission power is applied, are transmitted to the user terminals via the transmitting/receiving sections 103.

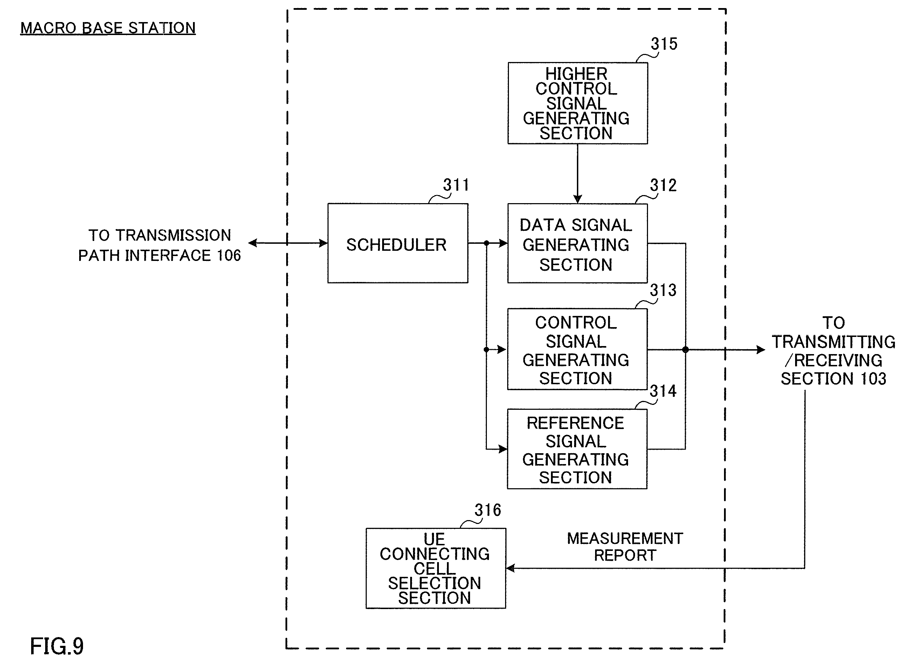

FIG. 9 is a principle functional configuration diagram of a baseband signal processing section 104 provided in a macro base station (radio base station 11) according to the present embodiment. As illustrated in FIG. 9, the baseband signal processing section 104 provided in the radio base station 11 is configured to include a scheduler 311, a data signal generating section 312, a control signal generating section 313, a reference signal generating section 314, a higher control signal generating section 315, and a UE connecting cell selection section 316.

The scheduler 311 schedules the downlink user data to transmit in the PDSCH, downlink control information to transmit in the PDCCH and/or the enhanced PDCCH (EPDCCH), and the reference signals. To be more specific, the scheduler 311 allocates radio resources based on command information from the higher station apparatus 30, feedback information (for example, CSI including CQIs, RIs and so on) from each user terminal 20, and so on. Note that a configuration may be employed in which the scheduler 311 schedules every small base station 12.

The higher control signal generating section 315 generates information related to DL TPC (the cycle of downlink transmission power control, the indices of subframes to which transmission power is applied, the measurement period and so on). Also, when the above first example is employed, the higher control signal generating section 315 generates information elements (IEs) for allowing the user terminals to report measurement reports by using a plurality of reference signals. Also, when the above second example is employed, the higher control signal generating section 315 generates information related to the transmission power of DL RS #B.

Note that when a user terminal makes initial connection with a small base station (when a small base station operates on a stand-alone basis), it is possible to provide the function of the higher control signal generating section 315 in the radio base station 12.

The data signal generating section 312 generates data signals (PDSCH) for the user terminals 20, the allocation of which to each subframe is determined in the scheduler 311. The data signals generated in the data signal generating section 312 include higher control signals that are generated in the higher control signal generating section 315.

The control signal generating section 313 generates control signals (PDSCH signals and/or EPDCCH signals) for the user terminals 20, the allocation of which to each subframe is determined in the scheduler 311. Also, the reference signal generating section 314 generates various reference signals to transmit on the downlink.

The UE connecting cell selection section 316 determines the small base stations with which the user terminals connect, based on measurement reports that are fed back from the user terminals 20. When the above first example is applied, the UE connecting cell selection section 316 configures the small cells to connect with on the uplink based on the received power (RSRP #A) of the first downlink reference signal (DL RS #A), and selects the small cells to connect with on the downlink based on the received power (RSRP #B) of the second downlink reference signal (DL RS #B).

In this way, by determining the UL cells with which the user terminals connect by using RS #A that is transmitted from each small cell with fixed transmission power, every user terminal can carry out UL transmission by using the small cell where the path loss is the minimum. Also, by determining the DL cell which a user terminal connects with based on RS #B that is transmitted with the transmission power that is applied to each small cell, it is possible to reduce the interference between the cells, and, furthermore, adjust the load of traffic/the number of user terminals between the cells (load balancing).

When the above second example is applied, the UE connecting cell selection section 316 configures the small cells with which user terminals connect on the uplink based on the path loss reported from the user terminals, and
selects the small cells with which the user terminals connect on the downlink based on RSRP #B.

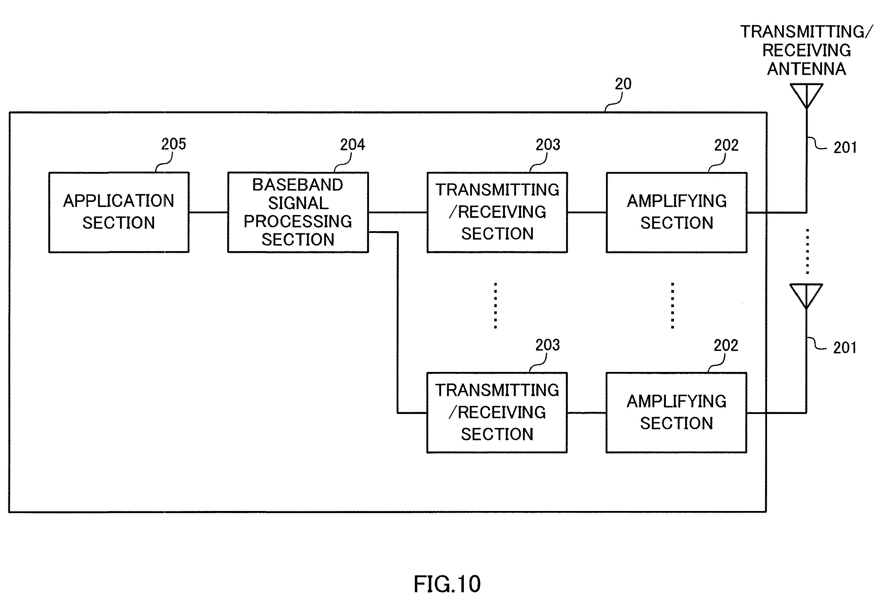

FIG. 10 is a diagram to illustrate an overall structure of a user terminal 20 according to the present embodiment. The user terminal 20 has a plurality of transmitting/receiving antennas 201 for MIMO transmission, amplifying sections 202, transmitting/receiving sections (receiving sections) 203, a baseband signal processing section 204, and an application section 205.

As for downlink data, radio frequency signals that are received in a plurality of transmitting/receiving antennas 201 are each amplified in the amplifying sections 202, and subjected to frequency conversion and converted into baseband signals in the transmitting/receiving sections 203. These baseband signals are subjected to an FFT process, error correction decoding, a retransmission control receiving process and so on, in the baseband signal processing section 204. In this downlink data, downlink user data is transferred to the application section 205. The application section 205 performs processes related to higher layers above the physical layer and the MAC layer, and so on. Also, in the downlink data, broadcast information is also transferred to the application section 205.

Meanwhile, uplink user data is input from the application section 205 into the baseband signal processing section 204. The baseband signal processing section 204 performs a retransmission control (H-ARQ (Hybrid ARQ)) transmission process, channel coding, pre-coding, a DFT process, an IFFT process and so on, and transfers the result to each transmitting/receiving section 203. The baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201. The transmitting/receiving sections 203 function as a receiving section to receive information related to the types of subframes, reported from the radio base stations, and so on.

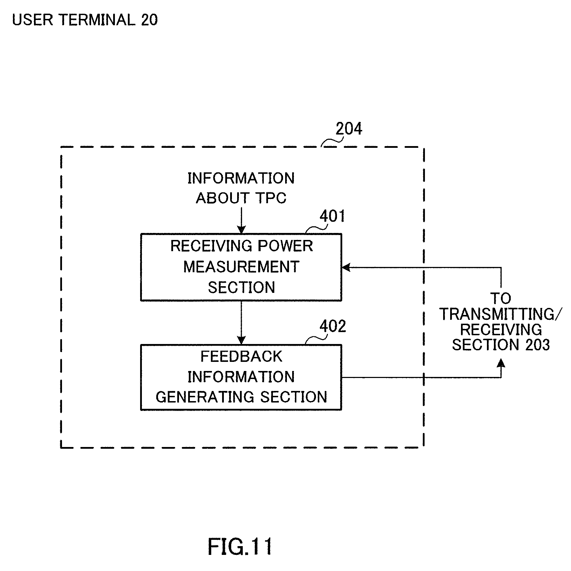

FIG. 11 is a principle functional configuration diagram of the baseband signal processing section 204 provided in a user terminal 20. As illustrated in FIG. 11, the baseband signal processing section 204 provided in the user terminal 20 has at least a received power measurement section 401 and a feedback information generating section 402. Note that, as described above, the baseband signal processing section 204 has a functional section that performs a retransmission control transmission process, channel coding, pre-coding, a DFT process, an IFFT process and so on.

The received power measurement section 401 measures RSRP (or RSRQ) using the reference signals transmitted from the small base stations. When this takes place, the received power measurement section 401 measures the received power of the reference signals based on information that relates to DL TPC (the cycle of downlink transmission power control, the indices of subframes to which transmission power is applied, the measurement period and so on) that is reported from the radio base stations (for example, the macro base station) through higher layer signaling and so on.

When the above first example is employed, the received power measurement section 401 measures the received power (RSRP #A) of the first downlink reference signal (DL RS #A) and the received power (RSRP #B) of the second downlink reference signal (DL RS #B). Also, when the above second example is employed, the received power measurement section 401 measures the received power (RSRP) by using the downlink reference signal (DL RS #B) transmitted from each small cell.

The feedback information generating section 402 generates information related to the received power of the reference signals measured in the received power measurement section 401 as feedback information. When the above first example is employed, the feedback information generating section 402 generates information related to the received power (RSRP #A) of the first downlink reference signal and the received power (RSRP #B) of the second downlink reference signal. When the above second example is employed, the feedback information generating section 402 finds the path loss based on the received power (RSRP #B) measured in the received power measurement section 401 and the transmission power reported from the radio base stations. In this case, the feedback information generating section 402 functions as a calculation section to determine the path loss.

The information that is generated in the feedback information generating section 402 is fed back to the radio base stations (the macro base station or the small base stations), as a measurement report, via the transmitting/receiving sections 203.

Now, although the present invention has been described in detail with reference to the above embodiments, it should be obvious to a person skilled in the art that the present invention is by no means limited to the embodiments described herein. The present invention can be implemented with various corrections and in various modifications, without departing from the spirit and scope of the present invention defined by the recitations of the claims. For example, a plurality of examples described above may be combined and implemented as appropriate. Consequently, the descriptions herein are provided only for the purpose of explaining examples, and should by no means be construed to limit the present invention in any way.

The disclosure of Japanese Patent Application No. 2013-057109, filed on March 19, 2013, including the specification, drawings and abstract, is incorporated herein by reference in its entirety.

## Claims

1. A user terminal that communicates with a radio base station that executes downlink transmission power control, the user terminal comprising:
a receiving section that receives a first reference signal which is transmitted with fixed transmission power, and a second reference signal to which the downlink transmission power control is applied;
a measurement section that measures received power of the first reference signal and the second reference signal; and
a transmission section that feeds back information related to the received power of the first reference signal and the second reference signal as a measurement report.

2. The user terminal according to claim 1, wherein the receiving section receives information related to an uplink connecting cell which is determined based on the received power information of the first reference signal, and a downlink connecting cell which is determined based on the received power information of the second reference signal.

3. The user terminal according to claim 1 or claim 2, wherein the first reference signal is a cell-specific reference signal (CRS) and the second reference signal is a channel state information reference signal (CSI-RS).

4. The user terminal according to claim 1, wherein the receiving section receives an information element (IE) for reporting the measurement report by using a plurality of reference signals, through higher layer signaling.

5. The user terminal according to claim 1, wherein the receiving section receives information related to the downlink transmission power control through higher layer signaling.

6. A user terminal that communicates with a radio base station that executes downlink transmission power control, the user terminal comprising:
a receiving section that receives a reference signal to which the downlink transmission power control is applied;
a measurement section that measures received power of the reference signal;
a calculation section that determines path loss based on the received power and transmission power of the reference signal; and
a transmission section that feeds back information related to the received power of the reference signal and the path loss as a measurement report.

7. The user terminal according to claim 6, wherein the receiving section receives information related to the transmission power of the reference signal by using higher layer signaling or downlink control information.

8. A radio base station that executes downlink transmission power control, the radio base station comprising:
a transmission section that controls transmission of a first reference signal and a second reference signal;
a power control section that applies fixed power to the first reference signal and applies the downlink transmission power control to the second reference signal; and
a determining section that determines a cell with which a user terminal connects on uplink, based on received power information of the first reference signal fed back from the user terminal, and determines a cell with which the user terminal connects on downlink, based on received power information of the second reference signal.

9. A radio communication method for a radio base station that executes downlink transmission power control and a user terminal, the radio communication method comprising:
transmitting, in the radio base station, a first reference signal to which fixed transmission power is applied, and a second reference signal to which the downlink transmission power control is applied, to the user terminal;
measuring, in the user terminal, received power of the first reference signal and the second reference signal, and feeding back information related to the received power of the first reference signal and the second reference signal as a measurement report; and
determining, in the radio base station having received the measurement report, an uplink cell with which the user terminal connects, based on the received power information of the first reference signal, and determines a downlink cell with which the user terminal connects, based on the received power information of the second reference signal.
